# EUROPÄISCHE PATENTANMELDUNG

(11) **EP 1 859 758 A1**
(43) Veröffentlichungstag der Anmeldung: **28.11.2007**
(21) Anmeldenummer: 07009022.0
(22) Anmeldetag: 04.05.2007
(51) Int. Cl.: A61C 13/00, A61C 13/09, A61C 13/083, C04B 41/00

(54) **Blockkörper**

(30) Priorität: 23.05.2006 DE 102006024065; 08.03.2007 DE 102007011339
(71) Anmelder: Firma Ivoclar Vivadent AG, FL-9494 Schaan (LI)
(72) Erfinder: Engels, Alexander, 6800 Feldkirch (AT); Hämmerle, Alfred, 6842 Koblach (AT)
(74) Vertreter: Baronetzky, Klaus

(57) **Zusammenfassung**

Die Erfindung betrifft einen Blockkörper (10) aus keramischen Massen, insbesondere Dentalmassen, aus mindestens einer keramischen Masse (15) mit vorgegebenen ersten optischen Eigenschaften und mindestens einer zweiten keramischen Masse (17) mit vorgegebenen zweiten optischen Eigenschaften sowie einem Übergangsbereich zwischen den beiden keramischen Massen, der aus sich ändernden Mischungen aus den mindestens zwei keramischen Massen zusammensetzt und der Änderungsgradient der Mischungen im Wesentlichen konstant ist.

## Beschreibung

Die Erfindung betrifft einen Blockkörper, insbesondere gemäß dem Oberbegriff von Anspruch 1, sowie ein Verfahren zur Erzeugung eines Blockkörpers, gemäß dem Oberbegriff von Anspruch 16.

Für die Herstellung von Zähnen, Zahnteilen oder dentalen Restaurationen (nachfolgend als Zahn bezeichnet) werden regelmäßig Blockkörper vorgefertigt und beispielsweise bei einer Temperatur von etwa 900°C bis 1100 °C vorgesintert. In diesem Zustand lässt sich der so hergestellte Blockkörper einfach mechanisch, beispielsweise durch Fräsen bearbeiten. Durch die Fräsbearbeitung entsteht ein Formkörper, der danach lediglich noch fertig gesintert werden muss, um die geforderte Dimension und die Endhärte zu erreichen. Hierbei muss bei der Herstellung des Formkörpers die Schwindung berücksichtigt werden, die bei Dichtsintern auftritt. Die Schwindung und die Festigkeit ergeben sich immer aus den Sinterbedingungen (vor allem Temperatur, Zeit, Atmosphäre), unter denen der Blockkörper hergestellt wird.

Um die Restaurationen möglich naturgetreu erscheinen zu lassen, ist es bereits vorgeschlagen worden, mit unterschiedlichen Schichten, die je verschieden gefärbt sind, keramische Massen zu einem Zahn zu kombinieren. Beispielsweise können bei gemäß diesem Vorschlag bis zu 10 dann dementsprechend je recht dünne Schichten aus keramischen Massen zusammen vorgesintert werden, so dass sich ein Formkörper mit einem entsprechenden Farbverlauf erzielen lässt. Wenn die unterschiedlich gefärbten Schichten je unterschiedliche chemische Beschaffenheiten aufweisen, besteht jedoch die Gefahr, dass auch die Vorsintertemperatur unterschiedlich ist. Die bei höheren Temperaturen sinternde Masse schmilzt dann an den Korngrenzen weniger stark an als die bei tieferen Temperaturen sinternde Masse. Es können sich unterschiedliche Schwindungen und Verbundfestigkeiten ergeben, die die Fertigbearbeitung problematischer machen.

Derartige Blockkörper können beispielsweise aus Keramiken, die auf ZrO₂ basieren, hergestellt werden. Es ist jedoch auch ohne weiteres möglich, Gläser und auch Glaskeramiken als Ausgangsmaterial zu verwenden. Bei Glaskeramiken werden typischerweise Primärpartikel aus Glasgranalien durch Zerkleinerung erzeugt, deren Korngröße im Bereich von 0,5 bis 50 Mikrometer liegt.
Im Rahmen dieser Erfindung wird unter Korngröße und den entsprechenden Größenangaben immer der d₅₀-Wert verstanden, der dem Durchmesser bei 50% auf der Summenkurve der Häufigkeitsverteilung von Partikeln entspricht, die nach ISO 13320 gemessen wird. Hierbei erfolgt die Einfärbung üblicherweise durch Zugabe von färbenden Oxiden zur Schmelze, aus der das Granulat gewonnen wird, oder zum aufgemahlenen Granulat. Diese Oxide liegen dann separat vor.

Um insofern einen verbesserten Blockkörper zu realisieren, ist es auch einmal vorgeschlagen worden, den Farbverlauf an den Farbverlauf eines vorhandenen, aufgeschnittenen Zahns, anzugleichen. Ein natürlicher Zahn hat typischerweise einen hellen oder weißlichen Inzisalbereich und einen stärker eingefärbten Zervikalbereich. Dazwischen erstreckt sich der zentrale Bereich, in dem sich die Farbe ändert. Zwischen dem zervikalen Bereich und dem zentralen Bereich einerseits und dem zentralen Bereich und dem inzisalen Bereich andererseits erfolgt ein Ausklingen des Farbübergangs, so dass der Änderungsgradient typischerweise nach der Art einer recht flachen Gausskurve ausgestaltet ist. Die Versuche, einen entsprechenden Farbverlauf durch entsprechende Schüttungen von keramischen Massen zu simulieren, führten jedoch überraschend zu ästhetisch wenig befriedigenden Ergebnissen, die zudem schlecht produzierbar waren.

Daher liegt der Erfindung die Aufgabe zu Grunde, einen ästhetisch deutlich verbesserten Blockkörper aus keramischen Massen, insbesondere für den Dentalbereich, gemäß dem Oberbegriff von Anspruch 1 zu realisieren.

Diese Aufgabe wird erfindungsgemäß durch Anspruch 1 gelöst. Vorteilhafte Weiterbildungen ergeben sich aus den Unteransprüchen.

Überraschend ergibt der erfindungsgemäße Blockkörper mit dem im Wesentlichen konstanten Änderungsgradienten einen optisch "leichteren" Eindruck des Zahns. Die Transluzenz im Inzisalbereich kommt besonders gut zur Geltung, ohne dass sich der bislang typischer Kunstzahneindruck ergeben würde, und zwar auch nicht bei näherer Betrachtung.

Der streng an den geforderten optischen Eigenschaften ausgerichteter Änderungsgradient erfordert es, dass Mischungsverhältnis - vom Inzisalbereich aus betrachtet - zunächst etwas weniger stark zur dunklen Farbe hin ansteigen zu lassen, als es bei einem linear sich ändernden Mischungsverhältnis der Fall wäre. Dies liegt darin begründet, dass eine Farbigkeit vom menschlichen Auge stärker erkannt wird und dementsprechend optisch stärker ins Gewicht fällt als ein reiner Helligkeitsunterschied. Erfindungsgemäß besonders günstig ist es, dass die Konstanthaltung des Änderungsgradienten nicht auf eine Fixierung des Änderungsgradienten beispielsweise der Helligkeit oder der Farbigkeit beschränkt ist. Günstig ist es vielmehr, wenn der resultierende Änderungsgradient konstant ist. Beispielsweise kann - wieder vom Inzisalbereich aus betrachtet - zunächst die Farbigkeit stärker und die Helligkeit weniger stark geändert werden, und dementsprechend später, also bei Annäherung an den zervikalen Bereich, die Farbigkeit weniger und die Helligkeit stärker.

Erfindungsgemäß besonders günstig ist es auch, dass eine allmähliche Änderung der physikalischen Parameter im Übergangsbereich zwischen der ersten und der zweiten keramischen Masse auftretende Spannungen minimiert. Wenn beide keramischen Massen beispielsweise unterschiedliche Schwindungen und/oder Verbundfestigkeiten aufweisen, werden die hierdurch erzeugten Spannungen in dem Blockkörper über einen größeren Bereich verteilt, so dass lokale Spannungsspitzen minimiert werden.

Die Realisierung eines Übergangsbereichs mit einem im Wesentlichen konstanten Änderungsgradienten der optischen Eigenschaften schliesst nicht aus, dass in einem anderen Bereich, der beispielsweise hierzu benachbart ist, die optischen Eigenschaften im Wesentlichen konstant sein können. Zu denken ist hier beispielsweise an den äußersten Inzisalbereich, oder den äußersten Zervikalbereich, der regelmäßig im Patientenmund von Zahnfleisch verdeckt ist, so dass hier keine ästhetischen Vorkehrungen getroffen werden müssen.

Auch ist zu berücksichtigen, dass bei Schneidezähnen die Materialstärke zum Inzisalbereich hin typischerweise stark abnimmt. Die Transluzenz nimmt bereits auch aus diesem Grunde zum Inzisalbereich hin zu, so dass dort ein Bereich mit konstant optischen Eigenschaften vorgesehen sein kann.

Bei einer derartigen Lösung ist es günstig, zwischen dem Übergangsbereich mit konstantem Änderungsgradienten und den Bereichen mit konstant optischen Eigenschaften je zusätzliche Transientenbereiche vorzusehen, bei denen sich der Änderungsgradient ändert.

Erfindungsgemäß besonders günstig ist es, dass der erfindungsgemäße Blockkörper einen Übergangsbereich aufweist, der sich nahezu über seine gesamte Höhe erstreckt. Die Höhe ist bevorzugt größer als die Höhe eines menschlichen Zahnes, wodurch die Möglichkeit eröffnet wird, die Einfärbung des Zahns in Richtung einer Farbe oder in Richtung der anderen Farbe zu verschieben, ohne dass der erfindungsgemäße Effekt des harmonischen Farbübergangs verloren ginge.

In einer weiteren bevorzugten Ausgestaltung ist der Farbübergang nicht eben, sondern leicht gewölbt, bevorzugt dergestalt, dass die dunklere Farbe mittig weiter nach unten reicht und die hellere Farbe, die typischerweise dem inzisalen Bereich zuzuordnen ist, außen weiter nach oben reicht. Unten und oben beziehen sich hier auf die Lage eines Blockkörpers, aus dem ein für den Oberkiefer bestimmter Zahn zu fräsen ist. Durch den gewölbten Aufbau der Farbübergangsebenen lässt sich das natürliche Zahnabbild noch detaillierter simulieren, denn auch beim natürlichen Zahn ist Dentin typischerweise von Schmelz umgeben.

Erfindungsgemäß ist es vorgesehen, dass der Änderungsgradient der resultierenden optischen Eigenschaften des Übergangsbereichs im Wesentlichen konstant ist. Es sei festgehalten, dass eine derartige Konstanz (im Bereich der Messgenauigkeit) angestrebt wird, wobei beispielsweise auch eine Abweichung von 2, 5 oder auch 10 % noch als konstant eingeschätzt wird.

In einer weiter modifizierten Ausgestaltung ist es vorgesehen, den Änderungsgradienten der resultierenden physikalischen Eigenschaften im Wesentlichen konstant zu halten. Auch hier gilt die vorstehend genannte Definition der Konstanz im Wesentlichen. Zu solchen physikalischen Eigenschaften kann beispielsweise die Festigkeit zählen, wobei diese Ausgestaltung lediglich dann möglich ist, wenn gleichartige keramische Massen eingesetzt werden, beispielsweise entweder zwei Glaskeramiken oder zwei Oxidkeramiken. Es versteht sich insofern, dass bei dieser Ausgestaltung die Verwendung von Keramiken mit zumindest im Wesentlichen gleichen Sinterbedingungen Vorbedingung ist.

Für die Realisierung des erfindungsgemäßen Blockkörpers unter Verwendung von Zirkondioxid-Keramiken werden bevorzugt die Keramiken in Granulatform dosiert zugeführt. Durch das Verpressen werden die Granulate aufgelöst, wobei aus einer Granulatgröße von vorzugsweise 50 bis 400 Mikrometer Partikel einer Korngröße 0,1 bis etwa 1 Mikrometer entstehen können.

Demgegenüber kann bei Verwendung von Glaskeramiken das Glasgranulat mit einer Korngröße vorliegen, die den Primärpartikeln entspricht, also beispielsweise im Bereich von 1 bis 25 Mikrometern.

Hierbei kann es günstig sein, dieses Pulver zunächst zu einem rieselförmigen Granulat aufzuarbeiten.

Während es erfindungsgemäß vorgesehen ist, das Mischungsverhältnis anhand der resultierenden Eigenschaften von zwei keramischen Massen zu steuern, ist es erfindungsgemäß nicht ausgeschlossen, diese mit einer dritten oder sogar noch mehr keramischen Massen zu kombinieren.

Auch wird hier die Erfindung schwerpunktmäßig unter Bezugnahme auf Oxidkeramiken wie beispielsweise ZrO₂ beschrieben. Dies schließt aber nicht aus, die erfindungsgemäßen Massnahmen bei Gläsern, Glaskeramiken und anderen Keramiken zu verwenden.

Erfindungsgemäß besonders günstig ist es, dass zusätzlich zu dem Übergangsbereich mit dem von Null verschiedenen Änderungsgradienten der optischen Eigenschaften ein Bereich mit im Wesentlichen konstanten optischen Eigenschaften vorgesehen ist.

Erfindungsgemäß besonders günstig ist es, dass zwischen dem Bereich mit konstanten optischen Eigenschaften ( 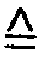 Änderungsgradient gleich Null) und dem Übergangsbereich mit im Wesentlichen konstantem Änderungsgradienten ein Transientenbereich vorgesehen ist, im welchem sich der Gradient von Null auf den von Null verschiedenen Wert des Änderungsgradienten ändert.

Erfindungsgemäß besonders günstig ist es, dass der Blockkörper im Wesentlichen eine Quaderform oder Tablettenform hat, wobei Länge bzw. Breite jeweils kleiner als die Höhe ist.

Alternativ erfindungsgemäß besonders günstig ist es, dass der Blockkörper in Quaderform vorliegt, wobei Länge oder Breite größer ist als die Höhe.

Erfindungsgemäß besonders günstig ist es, Erfindungsgemäß besonders günstig ist es, dass der Blockkörper im Wesentlichen eine Quaderform hat, deren Höhenmitte von dem Übergangsbereich gebildet ist.

Erfindungsgemäß besonders günstig ist es, dass der Blockkörper aus einem Granulat gebildet ist, dessen Granulatkorngröße größer als 10 Mikrometer und kleiner als 2 Millimeter ist, insbesondere zwischen 50 und 250 Mikrometer. Es ist günstig, wenn mindestens 95 Gew.-% des Granulats eine d₅₀-Korngröße im Bereich von 0,1 Mikrometer bis 2 Millimeter, mindestens 90 Gew.-% im Bereich von 1 Mikrometer bis 700 Mikrometer und mindestens 85 Gew.-% im Bereich von 50 bis 400 Mirkometer haben. Dies lässt sich beispielsweise durch entsprechende und an sich bekannte Siebverfahren realisieren, wobei es ggf. - gerade bei Glaskeramiken - sinnvoll sein kann, dass zunächst bestehende Pulver durch Granulationshilfsmittel, Bindemittel usw. zu Granulaten umzuformen.

Erfindungsgemäß besonders günstig ist es, dass der Blockkörper aus keramischen Massen aufgebaut ist, deren Primärkorngröße kleiner als 10 Mikrometer ist und insbesondere größer als 10 Nanometer.

Erfindungsgemäß besonders günstig ist es, dass der Blockkörper in einer Form hergestellt ist, auf die mindestens ein Pressstempel zur Erzeugung im Wesentlichen einer Quader- oder Tablettenform, bevorzugt zwei einander gegenüberliegende Pressstempel, wirken. Neben dem (uniaxialen) Verpressen des Blockkörpers mit ein oder zwei Pressstempeln kann auch ein isostatisches Verpressen erfolgen.

Erfindungsgemäß besonders günstig ist es, dass der Blockkörper aus einer dosierten Schüttung keramischer Massen hergestellt ist, deren Übergang entsprechend dem kennzeichnenden Teil von Anspruch 1 festgelegt ist.

Erfindungsgemäß besonders günstig ist es, in einem Übergangsbereich zwischen der ersten und der zweiten keramischen Masse der Änderungsverlauf des Mischungsverhältnisses an einer inneren Stelle des Blockkörpers, insbesondere in der Mitte, anders als am Rand des Blockkörpers ist, bezogen auf eine Schnittebene des Blockkörpers parallel zu dessen Grundfläche.

Erfindungsgemäß besonders günstig ist es, dass die Stellen gleichen Mischungsverhältnisses zwischen den beiden keramischen Massen auf einer Fläche liegen, die von einer Ebene verschieden ist, und insbesondere gewölbt ist.

Erfindungsgemäß besonders günstig ist es, dass die Fläche im Wesentlichen eine Kegelfläche ist, deren Kegelwinkel größer als Null ist, insbesondere mehr als 0,5°, und kleiner als etwa 30°.

Erfindungsgemäß besonders günstig ist es, dass in einem Übergangsbereich zwischen der ersten keramischen Masse und der zweiten keramischen Masse Punkte mit gleichen optischen Eigenschaften außen in einer anderen Ebene als innen in dem Blockkörper liegen.

Weitere Vorteile, Einzelheiten und Merkmale der Erfindung ergeben sich aus der nachstehenden Beschreibung eines Ausführungsbeispiels anhand der Zeichnungen. Es zeigen:
- Fig. 1: eine schematische perspektivische Seitenansicht eines erfindungsgemäßen Blockkörpers;
- Fig. 2: ein Diagramm zur Darstellung des Mischungsverhältnisses der keramischen Massen, aufgetragen über die Höhe des Blockkörpers, in der Ausführungsform gemäß Fig. 1;
- Fig. 3: eine grafische Darstellung der optischen Eigenschaften der Ausführungsform des Blockkörpers gemäß Fig. 1; und
- Fig. 4: der Änderungsgradient der optischen Eigenschaften, in einer grafischen Darstellung, aufgetragen über die Höhe des Blockkörpers gemäß Fig. 1.

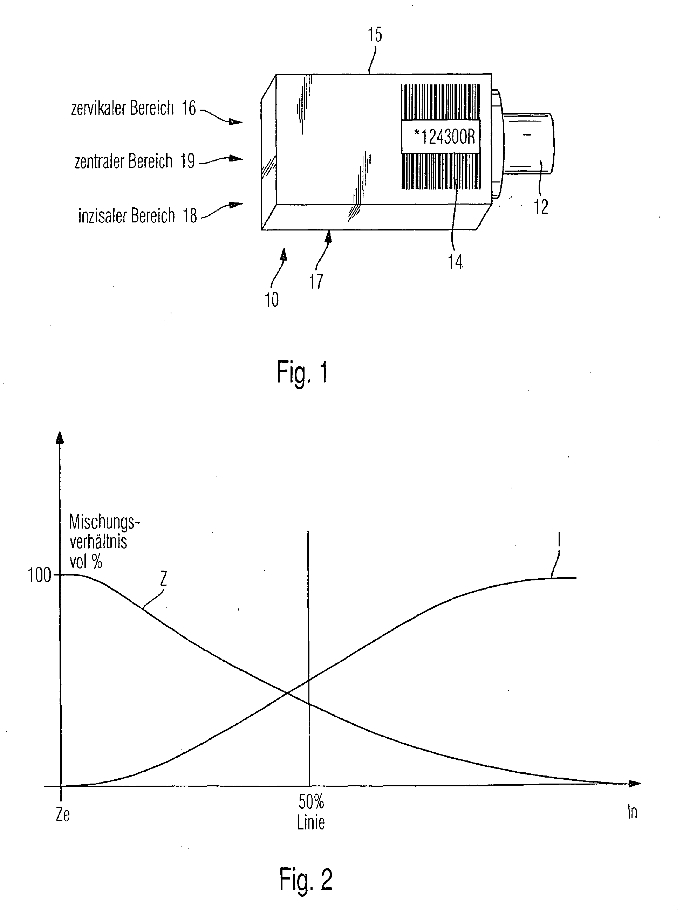

Der in Fig. 1 dargestellte Blockkörper 10 besteht aus Oxidkeramiken, wie beispielsweise ZrO₂. In der dargestellten Abbildung besteht der Blockkörper 10 aus einer ersten keramischen Masse 15 und einer zweiten keramischen Masse 17, die in besonderer Weise gemischt sind. Er ist durch dosiertes Mischen der keramischen Massen 15 bzw. 17 hergestellt, die ihn bilden. Der Blockkörper 10 wird nach Bereitstellung der Dosierung in an sich bekannterweise gepresst und vorgesintert. In diesem Zustand lässt er sich gut spannabhebend bearbeiten, beispielsweise fräsen, um einen Zahn als Restaurationsteil herzustellen.

Zur Vereinfachung der Bearbeitung ist auf dem eigentlichen Blockkörper 10 ein Ansatz 12 angebracht und fest mit dem keramischen Blockkörper 10 verbunden. Über den Ansatz 12 lässt sich der Blockkörper 10 in die Fräse einspannen.

In der Darstellung gemäß Fig. 1 ist der Blockkörper 10 in einer Lage dargestellt, bei dem eine dunklere Zahnfarbe oben und eine hellere Zahnfarbe unten angeordnet ist. Diese Anordnung entspricht einem Oberkieferzahn eines Patienten, denn im inzisalen Bereich 18 hat ein Zahn typischerweise eine größere Helligkeit und Transluzenz als im zervikalen Bereich 16.

Erfindungsgemäß erstreckt sich zwischen dem zervikalen 16 und dem inzisalen 18 Bereich ein zentraler Bereich 19, der in besonderer Weise ausgebildet ist, wozu auf die Erläuterung anhand der nachstehenden Figuren Bezug genommen wird.

Zur bestmöglichen Imitation einer natürlichen Ästhetik gibt es vom zervikalen Bereich 16 ausgehend keine direkte Abstufung der drei Bereiche zervikal, zentral und inzisal, sondern einen graduellen Farbverlauf bis hin zum fast oder vollständig ungefärbten inzisalen Bereich 18 des Gerüstes. Der in der einen Grundfarbe eingefärbte, zervikale Bereich 16 sollte bei dem Blockkörper 10 mindestens 20% der gesamten Blockhöhe einnehmen. Von da ausgehend findet der graduelle Übergang statt. Besonders bevorzugt nimmt der zervikale Bereich 16 etwa 50 % der Gesamthöhe des Zahnes ein.

Hier sei die Richtung von zervikalen 16 zum inzisalen 18 Bereich als Höhe des Zahns bezeichnet. In dem dargestellten Ausführungsbeispiel ist der erfindungsgemäße Blockkörper 10 quaderförmig, wobei seine Breite deutlich größer als seine Höhe ist, während seine Tiefe etwa der Höhe entspricht. Diese Ausführungsform ermöglicht es, zwei zueinander im Wesentlichen gleiche Zähne aus dem Blockkörper 10 herzustellen, wobei die Zähne je aus Bereichen des Blockkörpers 10 hergestellt werden, die in der Zeichnungsebene nebeneinander liegen.

Die Höhe des Blockkörpers 10 ist deutlich größer als die Höhe eines Zahns, beispielsweise um 50 %. Dies erlaubt es, dem Zahntechniker, die Lage des Zahns in dem Blockkörper 10 beliebig an die Erfordernisse, also die Gebisssituation des Patienten, anzupassen. Wenn die Lage weiter unten gewählt wird, entsteht automatisch ein hellerer Zahn, während bei Wahl der Lage weiter oben automatisch ein dunklerer Zahn entsteht.

Es versteht sich, dass die Form des erfindungsgemäßen Blockkörpers 10 nicht auf die Quaderform beschränkt ist. Vielmehr lässt sich anstelle dessen eine Tablettenform verwenden, oder aber eine Quaderform mit einer größeren Höhe als Breite, die für die Herstellung eines Einzelzahns geeignet ist.

Ferner lässt sich auch der Grad' der Farbänderung des Zahns in weiten Bereichen durch die Festlegung der Höhe des Blockkörpers 10 einstellen. Bei einer größeren Höhe, entsprechend einem Übermass von beispielsweise 100 %, bezogen auf einen Zahn, ist die Intensität des Farbübergangs geringer, während bei einem Übermass von lediglich 10 % der Farbübergang intensiver wird.

Aus Fig. 2 ist eine Änderung des Mischungsverhältnisses der keramischen Massen, aufgetragen über die Höhe des Blockkörpers 10 ersichtlich. Im Zervikalbereich 16 (bei Ze) liegt die Zervikalmasse Z nahezu 100 % vor, während die Inzisalmasse;I zu nahezu nicht vorhanden ist und höchstens ein Anteil von wenigen Prozent hat.

Demgegenüber liegt im Inzisalbereich 18 (bei In) die Zervikalmasse Z nahezu nicht vor, während die Inzisalmasse I ein Anteil von nahezu 100 % hat. Zwischen diesen Bereichen nimmt der Anteil der Zervikalmasse - vom zervikalen Bereich 16 aus betrachtet - kontinuierlich ab, während der Anteil der Inzisalmasse kontinuierlich zunimmt. In dem dargestellten Ausführungsbeispiel nimmt der Anteil der Zervikalmasse jedoch stärker als linear ab, und der Anteil der Inzisalmasse nimmt dementsprechend stärker als linear zu, je betrachtet von Zervikalbereich 16 aus.

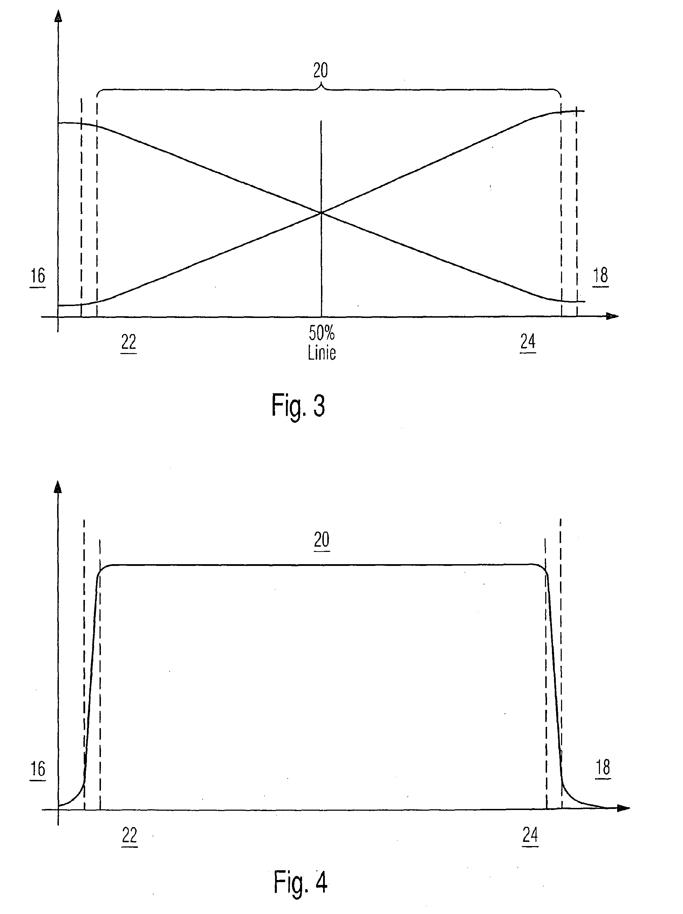

Der Schnittpunkt der beiden Kurven der Zervikalmasse und der Inzisalmasse wird daher vor der Mitte zwischen Zervikalbereich 16 und Inzisalbereich 18 erreicht. Dies ist in Fig. 2 mit der 50 % Linie markiert. Grund hierfür ist es erfindungsgemäß, einen konstanten Änderungsgrandienten der optischen Eigenschaften zu erzielen, wie es aus Fig. 3 ersichtlich ist. Es versteht sich, dass je nach Auswahl der betreffenden optischen Eigenschaften die Verschiebung der 50 % Linie gegenüber der geometrischen Mitte auch in die andere Richtung erfolgen kann. Das menschliche Auge nimmt intensive Farben stärker wahr, was erfindungsgemäß kompensiert wird, so dass bei Wahl der Chrominanz als optische Eigenschaft die entsprechende Verteilung ergibt.

Aus Fig. 3 ist der Verlauf der optischen Eigenschaften über die Höhe des Blockkörpers ersichtlich. Zwischen dem Zervikalbereich 16 und dem Inzisalbereich 18 verläuft der Änderungsgradient der optischen Eigenschaften - wie er aus Fig. 4 ersichtlich ist - konstant, so dass die optischen Eigenschaften je im Wesentlichen in einer Gerade mit konstanter Steigung aufgetragen werden können. Dieser Bereich wird als Übergangsbereich 20 bezeichnet. Aus technischen Gründen ist je zwischen dem Zervikalbereich 16 und dem Übergangsbereich 20 einerseits und zwischen dem Übergangsbereich 20 und dem Inzisalbereich 18 andererseits ein Transientenbereich 22 bzw. 24 vorgesehen, in dem die Steigung der Kurve auf den konstanten Wert zunimmt bzw. abnimmt.

In dem dargestellten Ausführungsbeispiel sind der Einfachheit halber optische Eigenschaften aufgetragen, deren Wert im Zervikalbereich 16 - also im Wesentlichen für die Zervikalmasse - und im Inzisalbereich 18 - also im Wesentlichen für die Inzisalmasse - gleich ist. Es versteht sich, dass dies eine vereinfachte Darstellung ist und sich in der Praxis- zumindest bei einigen optischen Eigenschaften - auf normierte Werte bezieht. beispielsweise ist typischerweise die Farbsättigung im Zervikalbereich 16 deutlich größer als im Inzisalbereich 18. Der Deutlichkeit halber wurde die Darstellung gemäß Fig. 3 insofern auf normierte Werte bezogen, wobei es sich versteht, dass bei Abstellung auf eine Kombination mit anderen optischen Eigenschaften wie dem Reflexionsgrad eine Normierung nicht erforderlich ist.

Aus Fig. 4 ist ersichtlich, dass sich die optischen Eigenschaften über den gesamten Übergangsbereich 20 mit dem gleichen Änderungsgradienten ändern. Der Übergangsbereich 20 ist von den Trarisientenbereichen 22 und 24 begrenzt, an die sich der Zervikalbereich 16 einerseits und der Inzisalbereich 18 andererseits anschliessen.

## Patentansprüche

1. Blockkörper aus keramischen Massen, insbesondere Dentalmassen, aus mindestens einer ersten keramischen Masse, die vorgegebene optische Eigenschaften aufweist, wie u.a. eine erste Transluzenz, eine erste Helligkeit, einen ersten Reflexionsgrad und eine erste Farbe, insbesondere gemäß einem in der Dentalindustrie gängigen Farbschlüssel, und mindestens einer zweiten keramischen Masse, die eine zweite Transluzenz, eine zweite Helligkeit, einen zweiten Reflexionsgrad und eine zweite Farbe,
**dadurch gekennzeichnet, dass** in einem Übergangsbereich zwischen der ersten keramischen Masse (15) und der zweiten keramischen Masse (17) dieser aus Mischungen der wenigstens beiden keramischen Massen (15 bzw. 17) mit einem solchen Gradienten eingestellt wird, dass der Änderungsgradient der resultierenden optischen Eigenschaften im Übergangsbereich im Wesentlichen konstant ist.

2. Blockkörper nach Anspruch 1, **dadurch gekennzeichnet, dass** zusätzlich zu dem Übergangsbereich mit dem von Null verschiedenen Änderungsgradienten der optischen Eigenschaften mindestens ein Bereich mit im Wesentlichen konstanten optischen Eigenschaften vorgesehen ist.

3. Blockkörper nach einem der vorhergehenden Ansprüchen, **dadurch gekennzeichnet, dass** zwischen dem Bereich mit konstanten optischen Eigenschaften (≙ Änderungsgradient gleich Null) und dem Übergangsbereich mit im Wesentlichen konstantem Änderungsgradienten ein Transientenbereich (22 bzw. 24) vorgesehen ist, im welchem sich der Gradient von Null auf den von Null verschiedenen Wert des Änderungsgradienten ändert.

4. Blockkörper nach einem der vorhergehenden Ansprüchen, **dadurch gekennzeichnet, dass** der Blockkörper (10) im Wesentlichen eine Quaderform hat, wobei Länge bzw. Breite jeweils kleiner als die Höhe ist.

5. Blockkörper nach einem der Ansprüche 1 bis 3, **dadurch gekennzeichnet, dass** der Blockkörper (10) in Quaderform vorliegt, wobei Länge oder Breite größer ist als die Höhe.

6. Blockkörper nach einem der vorhergehenden Ansprüchen, **dadurch gekennzeichnet, dass** der Blockkörper (10) im Wesentlichen eine Quaderform hat, deren Höhenmitte von dem Übergangsbereich gebildet ist.

7. Blockkörper nach einem der vorhergehenden Ansprüchen, **dadurch gekennzeichnet, dass** der Blockkörper (10) aus einem Granulat gebildet ist, das zu mindestens 95 Gew.-% eine d₅₀-Korngröße im Bereich von 0,1 Mikrometer bis 2 Millimeter, zu mindestens 90 Gew-% im Bereich von 1 Mikrometer bis 700 Mikrometer und zu mindestens 85 Gew.-% im Bereich von 50 bis 400 Mikrometer aufweist.

8. Blockkörper nach einem der vorhergehenden Ansprüchen, **dadurch gekennzeichnet, dass** der Blockkörper (10) aus keramischen Massen (15 bzw. 17) aufgebaut ist, deren Primärkorngröße kleiner als 10 Mikrometer ist und insbesondere größer als 10 Nanometer.

9. Blockkörper nach einem der vorhergehenden Ansprüchen, **dadurch gekennzeichnet, dass** der Blockkörper (10) in einer Form hergestellt ist, auf die mindestens ein Pressstempel zur Erzeugung im Wesentlichen einer Quader- oder Tablettenform, bevorzugt zwei einander gegenüberliegende Pressstempel, wirken.

10. Blockkörper nach einem der vorhergehenden Ansprüchen, **dadurch gekennzeichnet, dass** der Blockkörper (10) aus einer dosierten Schüttung keramischer Massen (15 bzw. 17) hergestellt ist, deren Übergang entsprechend dem kennzeichnenden Teil von Anspruch 1 festgelegt ist.

11. Blockkörper aus keramischen Massen, insbesondere Dentalmassen, mit mindestens einer ersten keramischen Masse (15) mit vorgegebenen optischen Eigenschaften und mindestens einer zweiten keramischen Masse (17) mit vorgegebenen optischen Eigenschaften, **dadurch gekennzeichnet, dass** in einem Übergangsbereich zwischen der ersten (15) und der zweiten (17) keramischen Masse der Änderungsverlauf des Mischungsverhältnisses an einer inneren Stelle des Blockkörpers (10), insbesondere in der Mitte, anders als am Rand des Blockkörpers (10) ist, bezogen auf eine Schnittebene des Blockkörpers (10) parallel zu dessen Grundfläche.

12. Blockkörper nach einem der vorhergehenden Ansprüche, **dadurch gekennzeichnet, dass** die Stellen gleichen Mischungsverhältnisses zwischen den beiden keramischen Massen (15 bzw. 17) auf einer Fläche liegen, die von einer Ebene verschieden ist, und insbesondere gewölbt ist.

13. Blockkörper nach Anspruch 11, **dadurch gekennzeichnet, dass** die Fläche im Wesentlichen eine Kegelfläche ist, deren Kegelwinkel größer als Null ist, insbesondere mehr als 0,5°, und kleiner als etwa 30°.

14. Blockkörper aus keramischen Massen, insbesondere Dentalmassen, mit mindestens einer ersten keramischen Masse (15), die vorgegebene physikalische Eigenschaften, nämlich u.a. eine erste Teerfestigkeit, eine erste Druckfestigkeit, eine erste Abtriebfestigkeit, eine erste Härte und einen ersten E-Modul aufweist, und mit mindestens einer zweiten keramischen Masse (17), die eine zweite vorgegebene physikalische Eigenschaften, nämlich u.a. eine erste Teerfestigkeit, eine erste Druckfestigkeit, eine erste Abtriebfestigkeit, eine erste Härte und einen ersten E-Modul aufweist, **dadurch gekennzeichnet, dass** in einem Übergangsbereich zwischen der ersten keramischen Masse (15) und der zweiten keramischen Masse (17) dieser gemischt aus wenigstens den beiden keramischen Massen (15 bzw. 17) aufgebaut ist, und dass das Mischungsverhältnis dieser wenigstens zwei keramischen Massen (15 bzw. 17) mit einem solchen Gradienten eingestellt wird, dass der Änderungsgradient der resultierenden mechanischen Eigenschaften, nämlich die Biegefestigkeit, die Druckfestigkeit, die Härte und die Abriebfestigkeit, immer gemessen am Blockkörper, im Übergangsbereich im Wesentlichen konstant ist.

15. Blockkörper nach einem der vorhergehenden Ansprüche aus mindestens einer keramischen Masse, die vorgegebene optische und mechanische Eigenschaften aufweist, wie u.a. eine erste Transluzenz, eine erste Helligkeit, einen ersten Reflexionsgrad, eine erste Farbe, eine erste Biegefestigkeit, eine erste Druckfestigkeit, eine erste Härte und eine erste Antriebfestigkeit, gemessen am thermisch behandelten Blockkörper und mit mindestens einer zweiten keramischen Masse, die eine zweite Transluzenz, eine zweite Helligkeit, einen zweiten Reflexionsgrad, eine zweite Farbe, eine zweite Biegefestigkeit, eine zweite Druckfestigkeit, eine zweite Härte und eine zweite Antriebfestigkeit
**dadurch gekennzeichnet, dass** in einem Übergangsbereich zwischen der ersten keramischen Masse (15) und der zweiten keramischen Masse (17) Punkte mit gleichen optischen Eigenschaften außen in einer anderen Ebene als innen in dem Blockkörper (10) liegen.

16. Verfahren zur Erzeugung eines Blockkörpers aus mindestens zwei pulverförmigen Massen, insbesondere für den Dentalbereich, **dadurch gekennzeichnet, dass** während des Befüllens des Befüllraums die Dosierung geändert wird und die Massen insbesondere und/oder unterschiedliche mechanische Eigenschaften aufweisen und dass während des Befüllens des Befüllraums die Dosierung der keramischen Massen und/oder deren Mischungsverhältnis geändert wird und die Massen insbesondere unterschiedliche optische und/oder mechanische Eigenschaften aufweisen.
